# EUROPEAN PATENT APPLICATION

(11) **EP 2 323 426 A1**
(43) Date of publication of application: **18.05.2011**
(21) Application number: 09817192.9
(22) Date of filing: 31.07.2009
(51) Int. Cl.: H04W 4/00

(54) **METHOD, APPARATUS AND SYSTEM FOR ACQUIRING SYSTEM MESSAGE**

(30) Priority: 24.09.2008 CN 200810216293
(71) Applicant: Huawei Technologies Co., Ltd., Shenzhen, Guangdong Province 518129 (CN)
(72) Inventor: MA, Hui, Guangdong 518129 (CN); CHEN, De, Guangdong 518129 (CN)
(74) Representative: Körber, Martin Hans
(86) International application number: PCT/CN2009/073009
(87) International publication number: WO 2010/037278

(57) **Abstract**

A method for acquiring system information includes: receiving a system message block sent by a network; and acquiring updated system information if a systemInformationValueTag carried in the received system message block indicates that the system information has changed. An apparatus and a system for acquiring system information are also disclosed. Because the femtocell does not need to broadcast all system information periodically, the technical solution under the present invention reduces the channel overhead of the system, relieves interference between systems, and reduces power consumption of the evolved Node B (eNB). When the femtocell does not broadcast all system information periodically, the User Equipment (UE) camps on the femtocell and sets up a connection with the femtocell through preset system information, a handover process, and setup of a Radio Resource Control (RRC) connection.

## Description

This application claims priority to Chinese Patent Application No. 200810216293.1, filed with the Chinese Patent Office on September 24, 2008 and entitled "Method, Apparatus and System for Acquiring System Information", which is incorporated herein by reference in its entirety.

### FIELD OF THE INVENTION

The present invention relates to mobile communication technologies, and in particular, to a method, an apparatus, and a system for acquiring system information.

### BACKGROUND OF THE INVENTION

A femtocell is a solution to extend indoor coverage of mobile communication. A femtocell is generally installed in a small environment. A user can use all kinds of mobile User Equipment (UE) such as a mobile phone, a personal computer or a palm computer to access the core network through a femtocell. A home access point of a femtocell supports plug-and-play, and can be connected to any existing Internet Protocol (IP)-based transport networks. Therefore, femtocells can replace the fixed broadband access devices used for households or small enterprises and are known as home evolved NodeBs (HeNBs) or indoor eNBs.

A femtocell is generally applied to network coverage of households or small enterprises, and is installed in an environment not vulnerable to have significant increase in users. Therefore, the femtocell ensures Quality of Service (QoS) of the network, supports high data -rate services, and solves prevalent problems in the existing cellular networks. The femtocell is easy to use. A user can deploy a femtocell flexibly as required, and seamless handover between the femtocell and an outdoor cell is supported.

In the existing radio communication system, a UE acquires system information by receiving system information broadcast. The system information includes most parameters needed by the UE, for example, cell selection/reselection, camping and channel configuration. In a Long Term Evolution (LTE) system, system information includes a Master Information Block (MIB) and System Information Blocks (SIBs) numbered from 1 to 9. The MIB and SIBs 1-9 correspond to different scheduling periods, and are broadcast periodically.

In the process of implementing the present invention, the inventor finds the following problems: In the existing radio communication system, the broadcasting of system information occupies plenty of resources with respect to radio frames. For example, in the existing LTE system, SIBs occupy more than 1/20 of radio frames. In a femtocell, the user quantity is small and stable, the network conditions seldom change, and some parameters in the system information of the femtocell keep unchanged for a long period. Therefore, if a femtocell is applied but the system information is still broadcast periodically in the same way as in the existing radio communication system, a futile broadcast channel overhead occurs.

### SUMMARY OF THE INVENTION

Embodiments of the present invention provide a method, an apparatus, and a system for acquiring system information to reduce the broadcast channel overhead caused by system information broadcast.

The objectives of the present invention are fulfilled through the following technical solution:

A method for acquiring system information according to an embodiment of the present invention includes:
receiving a system message block sent by a network; and
acquiring updated system information if a systemInformationValueTag carried in the received system message block indicates that the system information has changed.

A method for sending system information according to an embodiment of the present invention includes:
sending a system message block; and
notifying updated system information to a UE if a systemInformationValueTag carried in the sent system message block indicates that the system information has changed.

A UE according to an embodiment of the present invention includes:
a receiving module, configured to receive a system message block sent by a network; and
a processing module, configured to acquire updated system information through the receiving module if a systemInformationValueTag carried in the system message block indicates that the system information has changed.

A femtocell according to an embodiment of the present invention includes:
a sending module, configured to send a system message block and updated system information, where the system message block carries a systemInformationValueTag indicating whether system information has changed.

A system for acquiring system information according to an embodiment of the present invention includes:
a UE, configured to receive a system message block sent from a network side, and acquire updated system information if a systemInformationValueTag carried in the received system message block indicates that the system information has changed; and
a femtocell, configured to: send the system information and the system message block which carries the systemInformationValueTag indicating whether the system information has changed, and notify the updated system information to the UE after the system information has changed.

With the method, apparatus and system for acquiring system information according to embodiments of the present invention, the UE receives a system message block sent from the network side, and acquires the updated system information if a systemInformationValueTag carried in the received system message block indicates that the system information has changed. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

Besides, when the femtocell does not broadcast all system information periodically, the UE camps on the femtocell and sets up a connection with the femtocell through system information preconfiguration, a handover procedure, and a Radio Resource Control (RRC) connection setup procedure, thus ensuring that the UE can access the network normally.

### BRIEF DESCRIPTION OF THE DRAWINGS

FIG. 1 is a flowchart of a method for acquiring system information according to an embodiment of the present invention;
FIG. 2 is a flowchart of a method for sending system information according to an embodiment of the present invention;
FIG. 3 is a flowchart of a method for acquiring system information according to an embodiment of the present invention;
FIG. 4 is a schematic diagram showing a structure of a UE according to an embodiment of the present invention;
FIG. 5 is a schematic diagram showing a structure of a femtocell according to an embodiment of the present invention;
FIG. 6 is a schematic diagram showing another structure of the UE illustrated in FIG. 4; and
FIG. 7 is a schematic diagram showing a system for acquiring system information according to an embodiment of the present invention.

### DETAILED DESCRIPTION OF THE EMBODIMENTS

To make the technical solution, objectives and merits of the present invention clearer, the following describes the embodiments of the present invention in more detail with reference to accompanying drawings.

In the following embodiments, an LTE system is taken as an example of the radio communication system. The technical solution under the present invention is applicable to all other radio communication systems except that the name of the system information differs. In the following embodiments, the system information is femtocell system information.

To reduce the broadcast channel overhead caused by the broadcasting of system information, embodiments of the present invention provide the following technical solution:

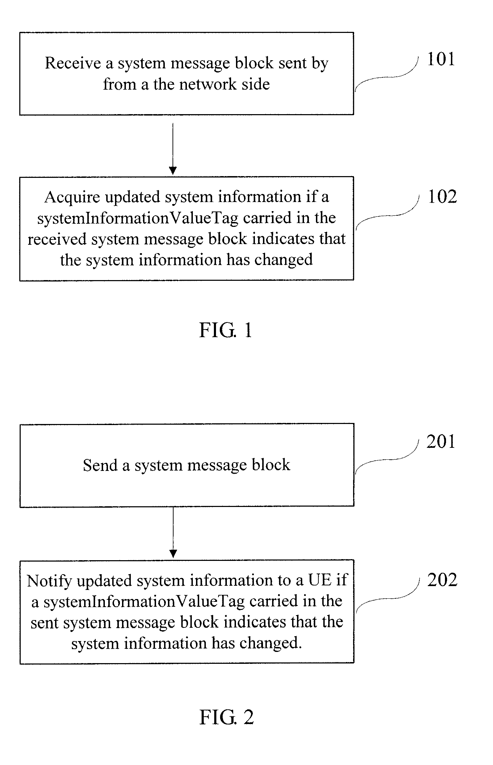

As shown in FIG. 1, a method for acquiring system information according to an embodiment of the present invention includes the following steps:
Step 101: Receive a system message block sent from the network side.
Step 102: Acquire updated system information if a systemInformationValueTag carried in the received system message block indicates that the system information has changed.

With the method for acquiring system information in this embodiment, the UE receives a system message block sent from the network side, and acquires the updated system information if a systemInformationValueTag carried in the received system message block indicates that the system information has changed. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

A method for sending system information according to an embodiment of the present invention includes the following steps:
Step 201: Send a system message block.
Step 202: Notify updated system information to a UE if a systemInformationValueTag carried in the sent system message block indicates that the system information has changed.

With the method for sending system information according to this embodiment, a system message block which carries a systemInformationValueTag is sent to the UE, where the systemInformationValueTag indicates that the system information has changed and instructs the UE to acquire the updated system information. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

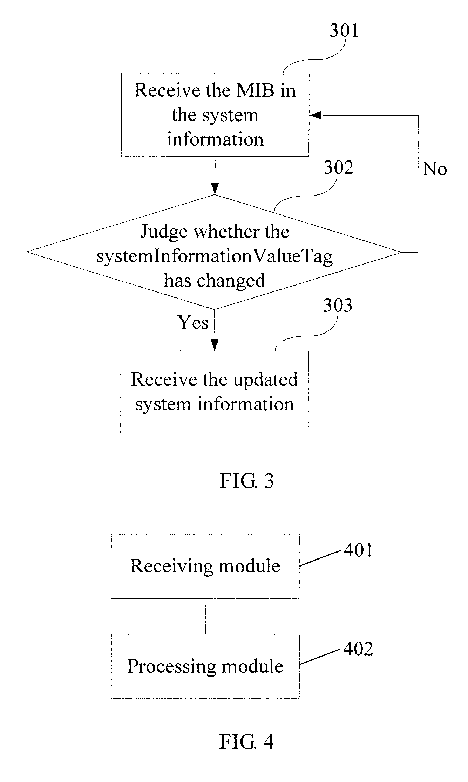

As shown in FIG. 3, a method for acquiring system information according to the first embodiment of the present invention includes the following steps:
Step 301: Receive a MIB sent by a femtocell.

In step 301, the UE receives the MIB sent by the femtocell. The MIB is broadcast periodically according to the scheduling period specified in the radio communication system in which the femtocell is located. The femtocell no longer broadcasts SIB1-SIB9 periodically.

Because SIB1-SIB9 are no longer broadcast periodically, new information such as systemInformationValueTag needs to be added into the MIB so that the UE can acquire the updated system information in time after the system information has changed. The systemInformationValueTag indicates whether the system information has changed. If any one of SIB1-SIB9 changes, the systemInformationValueTag changes accordingly. Therefore, the change of the systemInformationValueTag in the MIB reflects the change of the system information. For example, the initial value of the systemInformationValueTag may be set to 0. If the system information remains unchanged, the systemInformationValueTag remains unchanged; once any one of SIB1-SIB9 changes, the systemInformationValueTag increases by 1. If the system information changes after the systemInformationValueTag increases to the maximum value, the systemInformationValueTag is reset to the minimum value such as 0, and then the systemInformationValueTag increases gradually according to the foregoing rules.

Besides, because the MIB is broadcast periodically, system bandwidth carried in the MIB may be deleted to further save the broadcast channel resources. The deleted information may be acquired in other ways, for example, by presetting the information in the UE, setting up an RRC connection, or through handover.

Further, to reduce the broadcast channel overhead, the femtocell does not broadcast the MIB to indicate the change of the system information until the system information changes. The systemInformationValueTag in the MIB may be set to a specific value indicating whether the system information has changed. For example, the value "1" of the systemInformationValueTag indicates that the system information has changed; and the value "0" indicates that the system information remains unchanged.

Step 302: Judge whether the systemInformationValueTag indicates that the system information has changed. If the system information has changed, step 303 is performed; if the system information remains unchanged, step 301 is repeatedly performed.

The UE compares the systemInformationValueTag in the received MIB with the systemInformationValueTag stored in the UE. If the two tags are the same, the UE regards that the system information remains unchanged, and that the UE does not need to acquire new system information, and step 301 is repeatedly performed; if the two tags are different, the UE regards that the system information has changed, and that the UE needs to acquire the updated system information, and step 303 is performed.

In step 302, after the systemInformationValueTag changes, the UE stores the changed systemInformationValueTag.

If, in step 301, the femtocell broadcasts the MIB only when the system information changes, and a specific value of the systemInformationValueTag indicates whether the system information has changed, the change of the system information is judged simply according to the specific value in step 302, without the need of comparing the received systemInformationValueTag with the stored systemInformationValueTag. Accordingly, it is unnecessary to store the received systemInformationValueTag.

Step 303: Acquire the updated system information.

After the system information changes, the femtocell broadcasts the updated system information periodically in a specific time window. The updated system information may include only the changed system information. The time window may be stipulated by the protocol, or set to a value larger than the longest period in all scheduling periods of the system information.

The femtocell may broadcast the updated system information for a certain number of times repeatedly after the system information changes. The number of times of repeated broadcast may be stipulated by the protocol, or set by the user.

After determining that the system information has changed according to the systemInformationValueTag, the UE receives the updated system information broadcast by the femtocell. The UE does not stop receiving system information until all updated system information is received. For example, after determining that duplicate system parameters are received, the UE regards that all updated system information is received and stops receiving.

The UE may acquire the updated system information by using the foregoing method, or by requesting the latest system information from the femtocell, macro cell or core network initiatively.

The UE may send a SIRequest message to the femtocell directly after determining that the system information has changed. After receiving the SIRequest message, the femtocell sends part or all of the system information to the UE so that the UE can acquire the updated system information.

The UE may also send a SIRequest message to a macro cell after determining that the system information has changed. After receiving the SIRequest message, the macro cell acquires part or all of the system information of the femtocell in which the UE is located, and sends it to the UE so that the UE can acquire the updated system information. The macro cell acquires all system information of the femtocell in which the UE is located. For example, the macro cell knows, according to the femtocell identity carried in the SIRequest message, the femtocell in which the UE is located, and acquires the system information of the femtocell by requesting the system information from a Mobility Management Entity (MME). A femtocell identity uniquely identifies a femtocell. For example, a femtocell identity is a Physical Cell Identity (PCI) and a frequency, or a Global Cell Identity (GCI).

The UE may also send a SIRequest message to a core network after determining that the system information has changed. After receiving the SIRequest message, the core network device knows, according to the femtocell identity, the femtocell in which the UE is located, acquires part or all of the system information of the femtocell in which the UE is located, and sends it to the UE. For example, the UE sends a SIRequest message to a Short Message Service Center (SMSC). The SMSC acquires, through an MME, the system information of the femtocell in which the UE is located, and sends the system information to the UE.

According to the foregoing steps, no SIB is broadcast periodically until the system information changes, thus reducing radio resources occupied by broadcasting of system information, and reducing the broadcast channel overhead. Meanwhile, because less content needs to be broadcast, the interference between systems is relieved, and the power consumption of the eNB is reduced.

Besides, when the femtocell does not broadcast all system information periodically, the UE camps on the femtocell and sets up a connections the femtocell through preset system information, a handover procedure, and setup of an RRC connection, thus ensuring that the UE can access the network normally.

To ensure that the UE can use the network better, a validity period, for example 6 hours, of the systemInformationValueTag may be set. That is, the systemInformationValueTag is valid only within the set validity period, and becomes invalid after the set validity period. Therefore, a timer may be set in the UE. The timer keeps timing when the UE determines that the received systemInformationValueTag is the same as the stored systemInformationValueTag, or the value of the systemInformationValueTag indicates that the system information remains unchanged; and the timer is cleared to zero and restarts timing if the UE determines that the received systemInformationValueTag is different from the stored systemInformationValueTag, or the value of the systemInformationValueTag indicates that the system information has changed. The systemInformationValueTag becomes invalid when the timing reaches the set time duration.

After determining that the timing of the timer exceeds the validity period of the systemInformationValueTag, the UE needs to acquire the system information again, clear the timer to zero, and step 303 is performed. Preferably, when step 303 is performed, the UE acquires the system information by requesting the system information from the femtocell, macro cell or core network initiatively. After determining that the timing of the timer does not exceed the validity period of the systemInformationValueTag, the UE continues to judge whether the validity period expires. The UE may judge whether the validity period expires when the UE determines that the received systemInformationValueTag is the same as the stored systemInformationValueTag, and the UE may also make the judgment at fixed intervals.

The validity period of the systemInformationValueTag ensures that the UE can update the system information at intervals equivalent to at least the validity period. For example, when the communication between the UE and the network fails, the UE may be unable to receive the MIB in a long time, and therefore, the systemInformationValueTag remains unchanged, and the UE is unable to acquire new system information. In this case, setting a validity period for the systemInformationValueTag ensures that the UE can acquire the system information again after expiry of the validity period.

Before the first embodiment of the present invention is implemented, some presetting may be configured on the UE. When the UE accesses the network, part or all of the system information is configured for the UE beforehand. For example, part or all of the system information is stored into a Subscriber Identity Module (SIM) so that the system information is preset in the UE. Setting the system information for the UE beforehand provides the UE with the basic parameters required for accessing the network and ensures that the UE can camp on or connect to a femtocell.

Besides, the UE may acquire the system information when setting up an RRC connection with the femtocell. When an RRC connection is set between the UE and the femtocell, the femtocell receives an RRCConnectionRequest sent from the UE, and returns an RRCConnectionSetup message to the UE. The RRCConnectionSetup message carries part or all of the system information of the femtocell so that the UE can acquire the required system information through the RRC connection. The RRCConnectionSetup message returned by the femtocell may carry only the systemInformationValueTag. The UE performs step 302 after receiving the systemInformationValueTag so that the UE can acquire the updated system information when the system information changes.

The UE may also acquire the system information at the time of handover. When the UE hands over to the femtocell, the source eNB sends a Handover Command message to the UE. The Handover Command message carries a message sent by a target femtocell to the UE, and the source eNB needs to only transmit this message transparently. The messages sent by the target femtocell to the UE include part or all of the system information of this femtocell so that the UE can acquire the system information.

The message sent by the target femtocell to the UE and transmitted by the eNB transparently may carry the systemInformationValueTag in place of part or all of the system information. The UE performs step 302 after receiving the systemInformationValueTag so that the UE can acquire the updated system information when the system information changes. Preferably, if the UE needs to perform step 303 after finishing step 302, the UE acquires the system information by requesting the system information from the femtocell, macro cell or core network initiatively.

With the method for acquiring system information in this embodiment, the UE receives a SIB sent from the network side, and acquires the updated system information if a systemInformationValueTag carried in the received SIB indicates that the system information has changed. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

Besides, when the femtocell does not broadcast all system information periodically, the UE camps on the femtocell and sets up a connection with the femtocell through preset system information, a handover process, and setup of an RRC connection, thus ensuring that the UE can access the network normally.

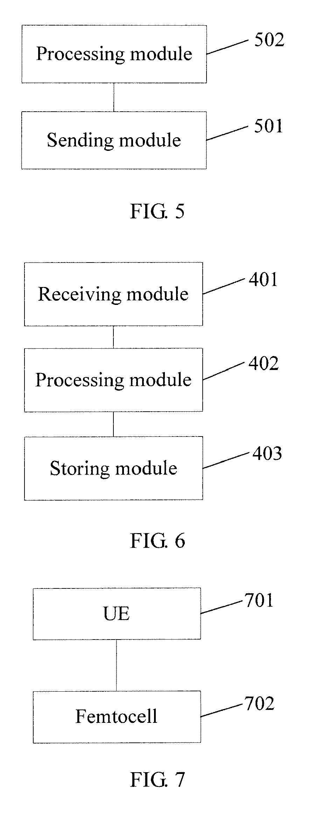

As shown in FIG. 5, the femtocell in the foregoing embodiment includes:
a sending module 501, configured to send a system message block and updated system information, where the system message block carries a systemInformationValueTag indicating whether system information has changed.

The femtocell may further include:
a processing module 502, configured to: schedule the MIB in the system information periodically, and send the MIB through the sending module; assign a value to the systemInformationValueTag in the MIB when the system information changes; and notify the updated system information to the UE. The processing module 502 may notify the updated system information to the UE in the following ways: the processing module 502 may, within one time window after the system information changes, broadcast the updated system periodically through the sending module 501; the processing module 502 may also broadcast the updated system information for a certain number of times repeatedly after the system information changes. The setting of the time window and the number of times of repeated broadcast are the same as the setting in the first embodiment, and thus the setting method is not repeatedly described here.

When the system information changes, the processing module 502 is further configured to increase the systemInformationValueTag by 1. If the system information changes after the systemInformationValueTag reaches the maximum value, the processing module 502 resets the systemInformationValueTag to the minimum value, for example, 0. The processing module 502 is further configured to broadcast the updated system information periodically through the sending module 501, where the broadcast updated system information includes only the changed system information or all system information.

The femtocell may further include a receiving module. The receiving module is configured to receive a SIRequest message sent by the UE. The processing module 502 is further configured to send part or all of the system information through the sending module 501 according to the SIRequest message sent by the UE. The updated system information notified by the processing module 502 to the UE may be part or all of the system information sent through the sending module 501 according to the SIRequest message sent by the UE.

The receiving module of the femtocell is further configured to receive an RRCConnectionRequest sent by the UE. The processing module 502 is further configured to send an RRCConnectionSetup message to the UE through the sending module 501 according to the RRCConnectionRequest. The RRCConnectionSetup message carries part or all of the system information of the femtocell, or carries a systemInformationValueTag of the femtocell.

The processing module 502 of the femtocell is further configured to send part or all of the system information of the femtocell to the UE through the sending module 501 or send the systemInformationValueTag of the femtocell to the UE while the UE hands over to the femtocell. The messages sent by the sending module 501 to the UE may be transmitted by the source eNB transparently.

The femtocell needs to broadcast only a minimum necessary system information rather than broadcast all system information periodically, thus reducing the broadcast channel overhead. Meanwhile, because less content needs to be broadcast, the interference between systems is relieved, and the power consumption of the eNB is reduced.

The femtocell provided in this embodiment sends a system message block which carries a systemInformationValueTag to the UE, where the systemInformationValueTag indicates whether the system information has changed and instructs the UE to acquire the updated system information. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

Besides, when the femtocell does not broadcast all system information periodically, the UE camps on the femtocell and connects to the femtocell through preset system information, a handover procedure, and RRC connection setup, thus ensuring that the UE can access the network normally.

As shown in FIG. 4, the UE in this embodiment includes:
a receiving module 401, configured to receive a system message block sent by a network; and
a processing module 402, configured to acquire updated system information through the receiving module if a systemInformationValueTag carried in the system message block indicates that the system information has changed.

Optionally, as shown in FIG. 5, the UE may further include:
a storing module 403, configured to store a systemInformationValueTag.

The following describes the modules in the embodiment of the present invention in more detail.

The receiving module 401 is configured to receive system information, such as a MIB and a SIB, sent by the femtocell.

The processing module 402 is configured to set up a connection with the network side according to the acquired system information.

The processing module 402 is configured to: compare the received systemInformationValueTag with the systemInformationValueTag stored in the storing module 403; and if the two tags are different, use the storing module 403 to store the received systemInformationValueTag and use the receiving module 401 to receive the updated system information sent by the femtocell.

The UE further includes a sending module. The sending module is configured to send a SIRequest message to acquire the system information. The processing module 402 is further configured to send the SIRequest message to the femtocell, macro cell or core network through the sending module to acquire the system information if determining that the received systemInformationValueTag is different from the stored systemInformationValueTag.

The processing module 402 is further configured to perform timing for the systemInformationValueTag stored in the storing module 403. After determining that the received systemInformationValueTag is different from the stored systemInformationValueTag, the processing module 402 restarts timing; after determining that the received systemInformationValueTag is the same as the stored systemInformationValueTag, the processing module 402 continues timing.

The processing module 402 is further configured to judge whether the systemInformationValueTag expires. After the timing of the processing module 402 exceeds a specified period, the processing module 402 sends a request for acquiring system information to the femtocell, macro cell, or core network through the sending module, and restarts timing. If the systemInformationValueTag does not expire, the processing module 402 performs no extra operation.

The processing module 402 may judge whether the systemInformationValueTag expires when the systemInformationValueTag in the received system message block is determined to be the same as the stored systemInformationValueTag, and may also judge, at fixed intervals, whether the systemInformationValueTag expires.

The storing module 403 of the UE may store part or all of the preset system information of the femtocell, and therefore, the processing module of the UE can camp on the femtocell and set up a connection with the femtocell, and can make better use of the network.

Besides, the sending module of the UE is further configured to send an RRCConnectionRequest to the femtocell. Moreover, the receiving module 401 is further configured to receive the RRCConnectionSetup message sent by the femtocell in response to the RRCConnectionRequest. The processing module 402 is further configured to acquire the system information or the systemInformationValueTag carried in the RRCConnectionSetup message.

The receiving module 401 of the UE is further configured to receive a Handover Command message sent by a source eNB. The processing module 402 is further configured to acquire the system information of the target femtocell from the Handover Command message, or acquire the systemInformationValueTag of the target femtocell from the Handover Command message.

The UE in the foregoing embodiment can use the network normally and acquire system information of the femtocell in time, without requiring the femtocell to broadcast all system information periodically.

The UE provided in this embodiment receives a system message block sent from the network side, and acquires the updated system information if a systemInformationValueTag carried in the received system message block indicates that the system information has changed. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

Besides, when the femtocell does not broadcast all system information periodically, the UE camps on the femtocell and connects to the femtocell through preset system information, a handover procedure, and RRC connection setup, thus ensuring that the UE can access the network normally..

As shown in FIG. 7, a system for acquiring system information according to an embodiment of the present invention includes an UE 701 and a femtocell 702.

The UE 701 is configured to: receive a MIB sent by the femtocell 702; judge whether the systemInformationValueTag in the received MIB is the same as the systemInformationValueTag stored in the UE 701; and receive the updated system information broadcast by the femtocell 702 and store the received systemInformationValueTag if the two tags are different.

Besides, the UE 701 is further configured to send a SIRequest message to the femtocell 702 if the received systemInformationValueTag is different from the stored systemInformationValueTag, and receive part or all of the system information sent by the femtocell 702 to acquire the system information.

Besides, the UE 701 is further configured to send the SIRequest message to a macro cell or a core network, and receive part or all of the system information sent by the macro cell or core network.

Besides, the UE 701 is further configured to judge whether the stored systemlnformationValueTag expires, and send a SIRequest message to the femtocell, macro cell or core network if the stored systemInformationValueTag expires.

Besides, the UE 701 is further configured to: request the femtocell 702 to set up an RRC connection, receive an RRCConnectionSetup message returned by the femtocell 702 in response to the request, and acquire the system information of the femtocell 702 from the RRCConnectionSetup message, or acquire a systemInformationValueTag of the femtocell 702 from the RRCConnectionSetup message.

Besides, the UE 701 is further configured to hand over to the femtocell 702, and acquire the system information or systemInformationValueTag of the femtocell 702 from a Handover Command message in the process of handover.

In the system for acquiring system information above, the femtocell 702 broadcasts the MIB in the system information periodically; when the system information changes, the femtocell 702 changes the systemInformationValueTag in the MIB, for example, increases the systemInformationValueTag by 1; after the system information changes, the femtocell 702 broadcasts the updated system information periodically within a time window, or broadcasts the updated system information repeatedly for a specific number of times.

Besides, the femtocell 702 is further configured to receive the SIRequest message sent by the UE 701, and send part or all of the system information to the UE 701 in response to the SIRequest message.

Besides, the femtocell 702 is further configured to receive the RRCConnectionRequest message sent by the UE 701, and send an RRCConnectionSetup message to the UE 701 in response to the RRCConnectionRequest message. The RRCConnectionSetup message carries part or all of the system information of the femtocell 702, or carries a systemInformationValueTag of the femtocell 702.

Besides, the femtocell is further configured to send part or all of the system information of the femtocell 702 or send the systemInformationValueTag of the femtocell 702 to the UE 701 through transparent transmission on the source eNB, when the UE 701 hands over to the femtocell 702.

In the system for acquiring system information above, the UE 701 acquires the updated system information in time and accesses the network normally, without requiring the femtocell 702 to broadcast all system information periodically, thus reducing the overhead of the broadcast channel of the eNB, relieving interference between systems, and reducing power consumption of the eNB.

Moreover, when the femtocell 702 does not broadcast all system information periodically, the UE 701 camps on the femtocell 702 and sets up a connection with the femtocell 702 through preset system information, a handover process, and setup of an RRC connection, thus ensuring that the UE can access the network normally.

In the communication system provided in this embodiment, the UE receives a system message block sent from the network side, and acquires the updated system information if a systemInformationValueTag carried in the received system message block indicates that the system information has changed. In this way, without requiring the femtocell to broadcast all system information periodically, the UE can acquire the updated system information in time according to the systemInformationValueTag, thus reducing the overhead of the broadcast channel of the eNB, relieving interference between systems, and reducing power consumption of the eNB.

Besides, when the femtocell does not broadcast all system information periodically, theUE camps on the femtocell and connects to the femtocell through preset system information, a handover procedure, and RRC connection setup, thus ensuring that the UE can access the network normally.

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A method for acquiring system information, comprising:
receiving, a system message block sent from a network side; and
acquiring updated system information if a systemInformationValueTag carried in the received system message block indicates that the system information has changed.

2. The method according to claim 1, wherein: before receiving the system message block sent from the network side, the method further comprises:
acquiring the system information, and setting up a connection with the network side according to the system information.

3. The method according to claim 2, wherein:
the step of acquiring the system information and setting up the connection with the network side according to the system information comprises:
presetting the system information, and setting up a connection with the network side according to the preset system information; or
when performing a Radio Resource Control (RRC) connection with a femtocell, acquiring the system information carried in an RRCConnectionSetup message sent by the femtocell, and setting up a connection with the network side according to the acquired system information; or
in the process of handing over to the femtocell, receiving the system information sent by the femtocell, and setting up a connection with the network side according to the received system information.

4. The method according to claim 1, wherein: in the following case, the systemInformationValueTag carried in the received system message block indicates that system information has changed:
the systemInformationValueTag carried in the received system message block is set to a specific value indicating that the system information has changed; or
the systemInformationValueTag carried in the received system message block is different from a stored systemInformationValueTag.

5. The method according to claim 4, wherein: if the systemInformationValueTag carried in the received system message block is different from the stored systemInformationValueTag, the method further comprises:
storing the systemInformationValueTag carried in the received system message block.

6. The method according to claim 5, wherein: before storing the systemInformationValueTag carried in the received system message block , the method further comprises:
when setting up a Radio Resource Control (RRC) connection with a femtocell, acquiring the systemInformationValueTag carried in an RRCConnectionSetup message sent by the femtocell, and determining that the received systemInformationValueTag is different from a stored systemInformationValueTag.

7. The method according to claim 5, wherein:before storing the systemInformationValueTag carried in the received system message block, the method further comprises:
in the process of handing over to the femtocell, receiving a systemInformationValueTag sent by the femtocell, and determining that the received systemInformationValueTag is different from the stored systemInformationValueTag.

8. The method according to claim 1, wherein: the step of acquiring the updated system information comprises:
receiving updated system information broadcast by a femtocell, wherein the updated system information is broadcast by the femtocell within a preset time window or broadcast by the femtocell repeatedly for a preset number of times.

9. The method according to claim 1, wherein: the step of acquiring the updated system information comprises:
sending an SIRequest message to a femtocell in which a User Equipment (UE) is located, and receiving system information of the femtocell, wherein the system information is sent by the femtocell; or
sending an SIRequest message to a macro cell, and receiving system information of the femtocell in which the UE is located, wherein the system information is sent by the macro cell; or
sending a SIRequest message to a core network device, and receiving system information of the femtocell in which the UE is located, wherein the system information is sent by the core network device.

10. The method according to claim 9, further comprising:
setting a timer, and clearing the timer to zero if the systemInformationValueTag carried in the received system message block indicates that the system information has changed, or continuing timing if the systemInformationValueTag carried in the received system message block indicates that the system information remains unchanged; and
judging whether the systemInformationValueTag expires, and, if the systemInformationValueTag expires, clearing the timer to zero and sending a SIRequest message to the macro cell, the core network device, or the femtocell in which the UE is located.

11. The method according to claim 10, wherein the step of judging whether the systemInformationValueTag expires comprises:
judging whether timing of the timer reaches a specified time span if the systemInformationValueTag carried in the received system message block indicates that the system information remains unchanged; or
judging, at fixed intervals, whether the timing of the timer reaches a specified time span.

12. The method according to any of claims 1-11, wherein the step of receiving the SIB sent from the network side comprises:
receiving a Master Information Block (MIB) sent by the femtocell periodically; or
receiving the MIB sent by the femtocell when the system information changes.

13. A method for sending system information, comprising:
sending a system message block; and
notifying updated system information to a User Equipment (UE) if a systemInformationValueTag carried in the sent system message block indicates that the system information has changed.

14. A User Equipment (UE), comprising:
a receiving module (401), configured to receive a system message block sent from a network side; and
a processing module (402), configured to acquire updated system information through the receiving module (401) if a systemInformationValueTag carried in the system message block indicates that the system information has changed.

15. The UE according to claim 14, wherein:
the UE further comprises a storing module which is configured to store preset system information; and
the processing module (402) is further configured to set up a connection with the network side according to the system information preset in the storing module; or
the processing module is further configured to, through the receiving module (401), acquire the system information carried in an RRCConnectionSetup message sent by a femtocell when setting up a Radio Resource Control (RRC) connection with the femtocell, and set up a connection with the network side according to the acquired system information; or
the processing module is further configured to, through the receiving module (401), receive the system information sent by the femtocell in the process of handing over to the femtocell, and set up a connection with the network according to the received system information.

16. The UE according to claim 15, wherein:
the receiving module (401) is further configured to receive the RRCConnectionSetup message sent by the femtocell, or receive messages sent by the femtocell during handover; and
the processing module (402) is further configured to acquire the system information or the systemInformationValueTag from the received RRCConnectionSetup message or from the message sent by the femtocell during handover; and the storing module is further configured to store the systemInformationValueTag if the systemInformationValueTag indicates that the system information has changed.

17. The UE according to claim 14, wherein:
the processing module (402) is configured to, through the receiving module (401), receive the updated system information broadcast by the femtocell if the received systemInformationValueTag indicates that the system information has changed.

18. The UE according to claim 14, wherein:
the UE further comprises a sending module which is configured to send an SIRequest; and
the processing module (402) is configured to, through the sending module, send the SIRequest to the network if the received systemInformationValueTag indicates that the system information has changed.

19. The UE according to claim 18, wherein:
the processing module (402) is further configured to: perform timing according to the received systemInformationValueTag, and restart the timing when the received systemInformationValueTag indicates that the system information has changed; and continue timing when the received systemInformationValueTag indicates that the system information remains unchanged; and
the processing module is further configured to, send the SIRequest to the network and restart the timing after the timing exceeds a specified time through the sending module.

20. The UE according to claim 19, wherein:
the processing module is configured to: determine whether the timing reaches the specified time duration when the received systemInformationValueTag indicates that the system information has changed; or
determine, at fixed intervals, whether the timing of the timer reaches the specified time duration.

21. A femtocell, comprising:
a sending module (501), configured to send a system message block and updated system information, wherein the system message block carries a systemInformationValueTag indicating whether system information has changed.

22. A system for acquiring system information, comprising:
a User Equipment (UE)(701), configured to receive a System Information Block (SIB) sent by a network, and acquire updated system information if a systemInformationValueTag carried in the received SIB indicates that the system information has changed; and
a femtocell (702), configured to: send the system information and the SIB which carries the systemInformationValueTag indicating whether the system information has changed, and notify the updated system information to the UE after the system information has changed.
